# EUROPÄISCHE PATENTSCHRIFT

(11) **EP 0 515 805 B1**
(45) Veröffentlichungstag und Bekanntmachung des Hinweises auf die Patenterteilung: **26.01.1994**
(21) Anmeldenummer: 92105872.3
(22) Anmeldetag: 04.04.1992
(51) Int. Cl.: A22B 5/20, B26D 1/14

(54) **Gerät zum Zerlegen und Zerwirken von Schlachtgut**
Tool for dividing and handling slaughter material
Outil pour diviser et ouvrer des marchandises de boucherie

(30) Priorität: 27.05.1991 DE 4117229
(43) Veröffentlichungstag der Anmeldung: 02.12.1992
(73) Patentinhaber: Balke, Axel, D-42653 Solingen 1 (DE)
(72) Erfinder: Balke, Axel, D-42653 Solingen 1 (DE)
(74) Vertreter: Stachow, Ernst-Walther, Prof. Dr.

(56) Entgegenhaltungen:
- EP-A- 0 120 759
- EP-A- 0 413 322
- DE-A- 2 331 806
- DE-A- 2 728 983
- FR-A- 2 488 484

## Beschreibung

Die Erfindung betrifft ein Gerät zum Zerlegen und Zerwirken von Schlachtgut der Fleischindustrie.

Bisher wurden zum Zerlegen und Zerwirken von Schlachtgut Sägen verwendet, die zum Trennen der im Schlachtgut vorhandenen Knochen geeignet sind. Diese Sägen weisen bevorzugt gegeneinander geschränkte Zähne auf. Zur industriellen Fleischverarbeitung sind die Sägen in Form von Einzelblättern oder in Form von Endlosbändern ausgebildet.

Ein gerät geeignet zum Zerlegen und Zerwirken von Schlachtgut, gemäß dem Oberbegriff des ersten Anspruchs, ist bekannt aus EP-A-413 322.

Beim Zersägen der Knochen bildet sich jedoch Knochenmehl, das dem die Knochen umgebenden Fleisch anhaftet. Das Knochenmehl stört die weitere Verarbeitung des Schlachtgutes, insbesondere ein sauberes Ablösen des Fleisches. Darüber hinaus nimmt das Knochenmehl rasch eine schwarze Farbe an, die dem Schlachtgut ein unansehnliches Aussehen gibt. Daher wird das Knochenmehl üblicherweise mit Wasser abgespült, was jedoch zu gesundheitlichen Risiken aufgrund der im Wasser vorhandenen Bakterien führt.

Weiterhin bilden sich beim Zersägen der im Schlachtgut vorhandenen Knochen leicht Knochensplitter an derjenigen Seite der Knochen, an der die Säge nach dem Durchtrennen des jeweiligen Knochens herausgeführt wird. Die Knochensplitter stecken in dem die Knochen umgebenden Fleisch und müssen aus diesem mühevoll entfernt werden.

Der Erfindung liegt daher die Aufgabe zugrunde, ein Gerät zum Zerlegen und Zerwirken von Schlachtgut zu schaffen, das Rückstände von Knochenmehl vermeidet und ein absolut glattes, splitterfreies Zerlegen und Zerwirken des Schlachtgutes gewährleistet.

Diese Aufgabe wird gelöst durch ein Gerät gemäß Anspruch 1, mit einem kreis- oder bogenförmigen Messer mit einer Vielzahl von Schneiden mit dazwischenliegenden Schneidlücken, wobei die Schneiden an ihrem in Schneidrichtung weisenden Ende einen konkaven Bereich aufweisen, dadurch gekennzeichnet, daß die Schneiden weiter einen sich am konkaven Bereich anschließenden, entgegengesetzt zur Schneidrichtung abfallenden konvexen Bereich aufweisen.

Es hat sich herausgestellt, daß mit Hilfe des erfindungsgemäßen Gerätes ein optimal glattes, splitterfreies Zerlegen und Zerwirken von Schlachtgut möglich ist, wobei die Entstehung von Knochenmehl weitestgehend vermieden wird.

In einer bevorzugten Ausbildung der Erfindung erstreckt sich der konkave Bereich zwischen zwei etwa gleich hohen Schneidspitzen.

Der konkave Bereich kann sich andererseits auch zwischen zwei Schneidspitzen erstrecken, von denen die in Schneidrichtung vorn liegende Spitze etwas niedriger als die andere Spitze ist. Dabei kann die in Schneidrichtung hinten liegende Spitze eine Abrundung aufweisen.

Vorzugsweise sind die Schneidlücken als konkave Vertiefungen ausgebildet, so daß der Schneidlückengrund stetig in die gegenüberliegenden Flanken zweier benachbarter Schneiden übergeht.

Der Schneidlückengrund, einschließlich der beiden gegenüberliegenden Flanken, ist bevorzugt schräg angeschärft.

Weiterhin können die Schneiden zumindest teilweise mit einer Verzahnung versehen sein. Vorzugsweise ist die Verzahnung im konvexen Bereich der Schneiden angeordnet.

Die zwischen den Schneiden ausgebildeten Schneidlücken verhindern, daß sich Fleisch oder Fett an den Schneiden, insbesondere in einer Verzahnung der Schneiden, absetzen. Beim Zerlegen und Zerwirken von Schlachtgut mit dem erfindungsgemäßen Gerät drückt sich das Fleisch oder Fett in die Schneidlücken hinein und wird sauber durchgeschnitten. Insbesondere bei dicken Fettschichten ist ein schräg angeschärfter Schneidlückengrund vorteilhaft, da hierdurch die Fettschicht in optimaler Weise glatt durchschnitten wird.

Die Erfindung schließt eine andere Verwendung des Gerätes als zum Zerlegen und Zerwirken von Schlachtgut nicht aus. Insbesondere kann das Gerät unter Umständen auch entgegengesetzt zu der oben beschriebenen Richtung verwendet werden.

Ein bevorzugtes Ausführungsbeispiel der Erfindung wird im folgenden anhand der Zeichnung näher beschrieben.

In der Zeichnung zeigen:
- Fig. 1: eine Seitenansicht des Gerätes im Ausschnitt und
- Fig. 2: eine vergrößerte Ansicht eines Teils des in Figur 1 dargestellten Gerätes.

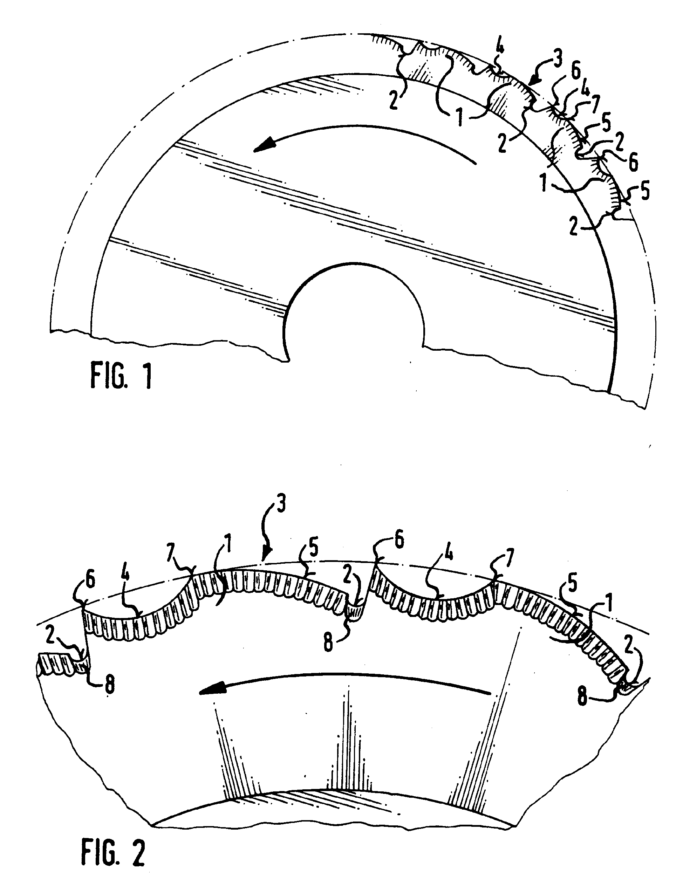

Das in Figur 1 dargestellte Gerät zum Zerlegen und Zerwirken von Schlachtgut ist als kreis- oder bogenförmiges Maschinenmesser gestaltet. Das Messer weist eine Vielzahl von Schneidzähnen 1 auf, die durch Schneidlücken 2 voneinander getrennt sind.

Jeder Schneidzahn 1 ist an seiner Außenseite mit einer Schneide 3 versehen. Die Schneiden 3 setzen sich aus einem konkaven Bereich 4 und einem konvexen Bereich 5 zusammen. Der konkave Bereich 4 ist an dem in Schneidrichtung weisenden Ende jeder Schneide 3 angeordnet und erstreckt sich zwischen zwei etwa gleich hohen Schneidspitzen 6 und 7. An den konkaven Bereich 4 schließt sich der konvexe Bereich 5 an, dessen Höhe entgegengesetzt zur Schneidrichtung des Messers abfällt.

Wie aus der Zeichnung hervorgeht, sind die Schneidlücken 2 konkav ausgebildet, so daß sie sich stetig zu den gegenüberliegenden Schneidspitzen 6 und 7 erstrecken.

Weiterhin weist der Schneidlückengrund einschließlich der gegenüberliegenden Flanken der benachbarten Schneidzähne einen schräg angeschärften Bereich 8 auf. Beim Schneiden drückt sich das Fett in die Schneidlücken 2 hinein, so daß insbesondere auch dicke Fettschichten sauber durchtrennt werden, ohne daß das Fett an den Schneiden 3 hängen bleibt.

### Bezugszeichenliste

1 Schneidzahn
2 Schneidlücke
3 Schneide
4 konkaver Bereich
5 konvexer Bereich
6 Schneidspitze
7 Schneidspitze
8 schräg angeschärfter Bereich

## Patentansprüche

1. Gerät zum Zerlegen und Zerwirken von Schlachtgut, mit einen kreis- oder bogenförmigen Messer mit einer Vielzahl von Schneiden (3) mit dazwischenliegenden Schneidlücken (2), wobei die Schneiden (3) an ihrem in Schneidrichtung weisenden Ende einen konkaven Bereich (4) aufweisen, dadurch gekennzeichnet daß die Schneiden weiter einen sich am konkaven Bereich (4) anschließenden, entgegengesetzt zur Schneidrichtung abfallenden konvexen Bereich (5) aufweisen.

2. Gerät nach Anspruch 1, **dadurch gekennzeichnet,** daß der konkave Bereich (4) sich zwischen zwei etwa gleich hohen Schneidspitzen (6, 7) erstreckt.

3. Gerät nach Anspruch 1 , **dadurch gekennzeichnet,** daß der konkave Bereich sich zwischen zwei Schneidspitzen erstreckt, von denen die in Schneidrichtung vorn liegende Spitze etwas niedriger als die andere Spitze ist.

4. Gerät nach Anspruch 2 oder 3, **dadurch gekennzeichnet,** daß die in Schneidrichtung hinten liegende Spitze abgerundet ist.

5. Gerät nach einem der Ansprüche 1 bis 4, **dadurch gekennzeichnet,** daß die Schneidlücken (2) als konkave Vertiefungen ausgebildet sind.

6. Gerät nach einem der Ansprüche 1 bis 5, **dadurch gekennzeichnet,** daß der Schneidlückengrund einen schräg angeschärften Bereich (8) aufweist.

7. Gerät nach einem der Ansprüche 1 bis 6, **dadurch gekennzeichnet,** daß die Schneiden (3) zumindest teilweise mit einer Verzahnung versehen sind.

8. Gerät nach Anspruch 7, **dadurch gekennzeichnet,** daß der konvexe Bereich (5) der Schneiden (3) mit einer Verzahnung versehen ist.

## Claims

1. Tool for dividing and handling slaughter material, with a circular or arc-shaped blade with multiple cutting edges (3) with intermediate cutting gaps (2), where the cutting edges (3) have a concave region (4) on the end facing in the cutting direction, **characterised in that** the cutting edges also have a convex region (5) next to the concave region which slopes downward against the cutting direction.

2. Tool as per Claim 1, **characterised in that** the concave region (4) is located between two cutting tips (6, 7) of approximately the same height.

3. Tool as per Claim 1, **characterised in that** the concave region is located between two cutting tips where the front tip in the cutting direction is somewhat lower than the other tip.

4. Tool as per Claim 2 or 3, **characterised in that** the rear tip in the cutting direction is rounded off.

5. Tool as per one of the Claims 1 to 4, **char****acterised in that** the cutting gaps (2) are designed as concave recesses.

6. Tool as per one of the Claims 1 to 5, **characterised in that** the base of the cutting gap has an obliquely sharpened area (8).

7. Tool as per one of the Claims 1 to 6, **characterised in that** the cutting edges (3) are at least partially toothed.

8. Tool as per Claim 7, **characterised in that** the convex region (5) of the cutting edges (3) is toothed.

## Revendications

1. Outil pour diviser et ouvrer des marchandises de boucherie avec une lame circulaire ou arquée ayant une multiplicité de tranchants (3) avec des entretranchants (2), les tranchants présentant, à leur extrémité pointant en sens de coupe, une zone concave (4), caractérisé par ce que les tranchants présentent en outre une zone convexe (5) contiguë à la zone concave et inclinée en sens opposé au sens de coupe.

2. Outil suivant revendication 1, caractérisé par ce que la zone concave (4) s'étend entre deux pointes coupantes (6, 7) de hauteur à peu près égale.

3. Outil suivant revendication 1, caractérisé par ce que la zone concave s'étend entre deux pointes coupantes dont celle qui, vue en sens de coupe, se trouve à l'avant, est un peu plus basse que l'autre pointe.

4. Outil suivant revendication 2 ou 3, caractérisé par ce que la pointe qui, vue en sens de coupe, se trouve à l'arrière, est arrondie.

5. Outil suivant l'une des revendications 1 à 4, caractérisé par ce que les entretranchants (2) sont réalisés comme cavités concaves.

6. Outil suivant l'une des revendications 1 à 5, caractérisé par ce que le fond des entretranchants présente une zone (8) affûtée en biseau.

7. Outil suivant l'une des revendications 1 à 6, caractérisé par ce que les tranchants (3) sont pourvus, au moins en partie, d'une denture.

8. Outil suivant revendication 7, caractérisé par ce que la zone convexe (5) des tranchants (3) est pourvue d'une denture.
